Europäisches Patentamt

European Patent Office

Office européen des brevets

(19)

(11) Publication number: **0 185 165**
**B1**

(12) **EUROPEAN PATENT SPECIFICATION**

(45) Date of publication of patent specification: **26.07.89**

(21) Application number: **85113309.0**

(22) Date of filing: **21.10.85**

(51) Int. Cl.⁴: **B 60 T 11/20,** B 60 T 11/22, B 60 T 11/16

(54) Plastic master cylinder.

(30) Priority: **30.11.84 US 676978**

(43) Date of publication of application:
**25.06.86 Bulletin 86/26**

(45) Publication of the grant of the patent:
**26.07.89 Bulletin 89/30**

(84) Designated Contracting States:
**DE FR GB IT**

(56) References cited:
**EP-A-0 083 277**
**DE-A-2 941 198**
**DE-B-1 177 955**
**FR-A-2 370 187**
**GB-A- 506 936**
**GB-A-1 051 512**
**GB-A-1 481 612**
**US-A-3 802 200**
**US-A-4 162 616**

(73) Proprietor: **ALLIED-SIGNAL INC. (a Delaware corporation)**
**Columbia Road and Park Avenue P.O. Box 2245R Morristown New Jersey 07960 (US)**

(72) Inventor: **Myers, Lawrence Robert ALLIED CORPORATION**
**Law Department (Patent) 401 Bendix Drive P.O. Box 4001 South Bend Indiana 46634 (US)**

(74) Representative: **Lejet, Christian et al Division Technique Service Brevets BENDIX Europe 126, rue de Stalingrad F-93700 Drancy (FR)**

Courier Press, Leamington Spa, England.

## Description

This invention relates to a plastic master cylinder.

In recent years, there has been a great emphasis on reducing the overall weight of automotive vehicles in order to increase the mileage capability of such vehicles. This has resulted in not only an emphasis on providing more simplified structures, but in eliminating heavy materials utilized in the manufacture of many components. The use of plastics has increased dramatically, to the extent that many of the interior and exterior components of an automobile are plastic. The brake master cylinder of an automobile has been manufactured traditionally by a casting utilizing either sand or metal cores. Cast metal master cylinders have been utilized for many years to provide a small but heavy component for the vehicle. In order to provide a light weight brake master cylinder, alternatives such as magnesium die casting have been attempted. Fields U.S. Patent 4,122,596 issued October 31, 1978 illustrates a brake master cylinder having a magnesium body die cast about a metal tube liner. However, at high pressures the materials separate and allow leakage because of the different expansion rates of the materials involved. Document EP—A—83 277 describes a master cylinder assembly corresponding to the preamble of claim 1 comprising a housing with a bore for movably receiving a pair of pistons, a pair of sealing members defining respective pressure chambers, a sleeve disposed within the bore to position the sealing members, and a reservoir outside the housing for communicating fluid carried therein with the housing bore, this reservoir consisting of an integrally molded single unit which extends into the housing bore to form a liner therein which receives the sleeve and sealing members.

It is desirable to provide a simple, inexpensive, yet reliable brake master cylinder which is able to withstand the pressures effected during application of the vehicle brakes. Plastic master cylinders have been produced for low pressure applications such as motorcycles and clutch master cylinders wherein the plastic material, by itself, has sufficient strength to withstand the low pressures effected during braking application. However, it is desirable to produce a plastic brake master cylinder able to withstand the high braking pressures effected during the braking of much larger automotive vehicles, as opposed to the above-described low pressure applications.

The present invention is defined in claim 1 and comprises a plastic master cylinder which is insert molded about a metal liner tube. The metal liner tube is in the form of a cylinder closed at one end, the other end being open and for receiving a pair of pistons therein. The metal liner tube is disposed within an insert molding cavity, and an appropriately shaped mandrel placed within the tube. Plastic material is insert molded within the cavity to form a plastic master cylinder enveloping substantially the metal liner tube, and also providing an integral reservoir. The plastic master cylinder is removed from the cavity, and subsequent manufacturing operations accomplished in order to provide a finished product. The plastic master cylinder of the present invention provides a low cost, light weight, and simply manufactured brake master cylinder which is able to withstand the high pressures effected in the pressure chambers during brake application. Specifically, the metal tube liner provides sufficient strength to withstand the hoop stresses effected during braking. The master cylinder provides an integral plastic housing and reservoir comprising an inexpensive, integral brake master cylinder unit.

The invention will now be described with reference to the accompanying drawing wherein:

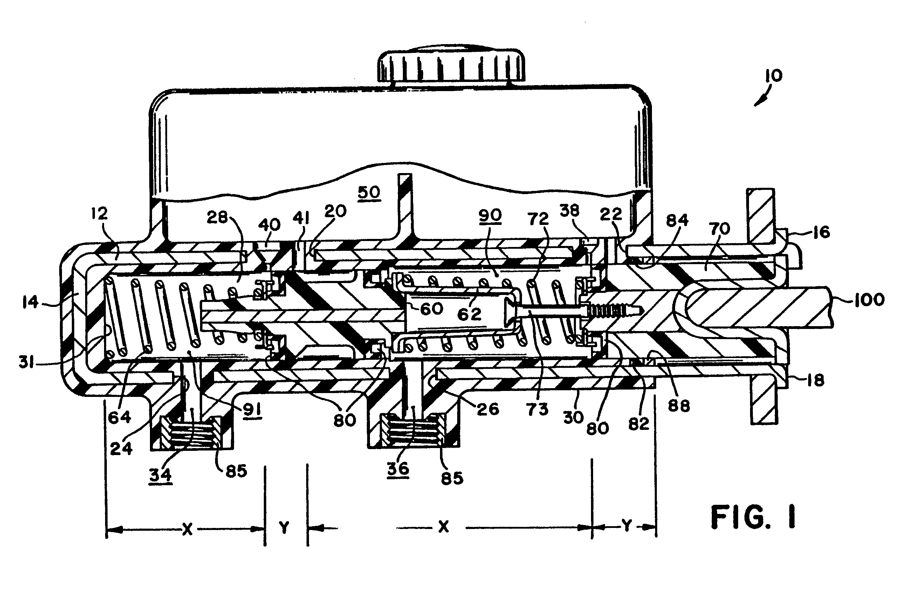

Figure 1 is a cross section of the plastic master cylinder assembly constructed in accordance with the present invention.

The master cylinder of the present invention is designated generally by reference numeral 10. A metal liner or tube 12 is substantially cylindrical in shape with closed end 14 and open end 16. End 16 includes a radially outwardly extending flange 18, and liner 12 includes reservoir openings 20 and 22 disposed on one side of the liner and brake line connection openings 24 and 26 disposed on the other side. Plastic master cylinder housing 30 comprises plastic material insert molded about liner 12 to substantially encase or encompass the liner. Plastic housing 30 includes brake outlet openings 34 and 36 for communication between the master cylinder bore 28 and brake line connections. Reservoir openings 38 and 40 provide for communication between the reservoir 50 and the bore 28. Reservoir 50 comprises plastic material formed simultaneously with the forming of master cylinder housing 30 to provide an integral plastic master cylinder housing and reservoir. A pair of pistons 60 and 70 are disposed within bore 28, with primary piston 70 biasing a spring 72 against the secondary piston 60 and a spring 64 being disposed between piston 60 and end wall 31 of bore 28. A slide rod 73 is received by extension piece 62 engaging secondary piston 60. The pistons 60 and 70 have seals 80 disposed thereabout that provide sealing engagement with the circumposing bore 28, and seal 82 is disposed between a housing shoulder 84 and ring 88. It should be clearly understood that the particular type and shape of pistons, springs, and seals are entirely discretionary according to the designs characteristics desired. The plastic brake master cylinder housing and reservoir integral therewith may include many different modifications and changes, in order to accommodate a wide variety of master cylinder designs.

Threaded inserts 85 are located at brake outlet openings 34 and 36. The inclusion of inserts 85 is optional according to the type of master cylinder design being provided. In other words, the housing 30 may be formed with integral threadings for receiving brake line connections, or if different or stronger connections are needed, metal inserts 85 may be included in the insert molding process in order to provide a metal-to-metal connection with brake line couplings. Pistons 60 and 70 combine with bore 28 and end wall 31 to define high pressure chambers 90 and 91. The respective high pressure areas of chambers 90 and 91 are indicated by the distances X illustrated Figure 1, and the low pressure areas indicated by the distances Y. When the brake pedal (not shown) is depressed so that a push rod 100 displaces piston 70 to the left and results in the creation of high pressure in chamber 90, the high pressure is communicated through outlet opening 36 to the associated brake line, and spring 72 correspondingly biases piston 60 to the left to pressurize brake fluid within chamber 91 for communication through line 34 to the associated brake line. It should be noted that in the high pressure areas indicated by the distances "X", metal liner tube 12 is completely encased by plastic material. This precludes any possibility of separation of the two materials (plastic and metal) because of the high pressure exerted thereon. By eliminating any exposed surfaces where two different materials are mated, there is no possibility for pressurized fluid to enter between the materials and cause separation thereof. The high pressure areas begin just past the compensation ports or reservoir openings 38 and 40, and for high pressure chamber 90 the area extends almost to pressure opening 41.

The plastic master cylinder 10 of the present invention is manufactured by forming the metal liner tube 16 so that the end 14 is substantially closed and the other open end has an outwardly extending flange 16. Alternatively, end 14 of tube 16 may include a small opening for receiving a positioning pin of the mandrel positioned within the tube during the insert molding process. The small opening would be sealed by a plug which would preclude the escape of any fluid from high pressure chamber 91. The metal tube 12 and an appropriately shaped mandrel (not shown) are positioned within the die of an insert molding apparatus. Plastic material, for example fibre glass reinforced nylon such as Zytel®, is insert molded within the die to form plastic master cylinder body 30 and integral reservoir 50. Liner 12 may be made of steel, aluminum, magnesium, and any other metal suitable for use in the present invention. Aluminum is the preferred material for liner 12 because aluminum and nylon have approximately equal coefficients of thermal expansion so that they do not separate from one another during temperature changes. It should be clearly understood that the formation of reservoir 50 as an integral component of plastic master cylinder housing 30 is optional; the reservoir 50 may be a separate plastic or metal unit which is subsequently attached or secured to the master cylinder body 30. After the insert molding operation, the plastic master cylinder is removed from the die, and then further deflashing operations and preparation enables the subsequent insertion of springs 64, 72 and piston 60, 70. Of course, the metal inserts 85 may be included within the insert molding process in order to provide threaded metal couplings for receiving the metal threads of brake connection lines, or the openings 34 and 36 may have plastic threads for receiving complementary-shaped plastic threads of a brake lining connection.

The plastic master cylinder and reservoir provides a low cost, light weight assembly having substantially advantages over prior art master cylinder constructions. The plastic housing provides for a plastic-to-plastic interface with plastic pistons, so that expensive machining operations for the metal pistons and bore are eliminated. The metal liner provides sufficient strength to withstand the hoop stresses effected during braking application, and additionally the reservoir unit may be integrally molded with master cylinder housing 30. Because housing 30 completely encompasses the metal liner in the areas where high pressures are effected during braking application, there is no possibility of separating between the metal material and the molded plastic material. This accomplishes a high structural integrity for plastic master cylinder housing 30. Additionally, the plastic master cylinder eliminates many machining operations that are required in the manufacture of a typical, cast metal master cylinder body. Thus, there is a substantial savings in weight accompanied by a reduction in manufacturing costs and price.

## Claims

1. A master cylinder assembly (10) comprising a housing (30) defining a bore (28) movably receiving therein a pair of pistons (60, 70), sealing means (80) for cooperating with the pair of pistons and surface of the bore to substantially define a pair of pressure chambers (90, 91), a reservoir (50), reservoir opening means (38, 40) for communication with said pressure chambers to permit fluid within the reservoir to communicate with said bore, brake line outlet means (34, 36) for communicating fluid pressure from the respective chambers to respective brake line connections, the pair of pistons (60, 70) being movable during braking to generate fluid pressure within the pair of pressure chambers (90, 91) and the fluid pressure communicated to associated brake line connections, a liner (12) engaging said housing (30), the housing (30) comprising a plastic housing (30) encasing said liner which itself comprises a metallic liner (12) in the shape of a tube, said plastic housing being integrally molded to the liner (12), the liner (12) providing structural integrity for said plastic housing (30) and including reservoir openings (20, 22) and brake line openings (24, 26), the reservoir openings (20, 22) defining areas of the plastic housing (30) with said reservoir opening means (38, 40) extending therethrough and the surfaces of said reservoir openings (20, 22) being enclosed completely by plastic, characterized in that the liner (12) is insert molded within said housing and completely enclosed, interiorly and exteriorly, by plastic where said housing (30) and liner (12) define the perimeters of said pressure chambers (90, 91), that the brake line openings (24, 26) further define areas of the housing with said brake line outlet means (34, 36) extending therethrough and the surfaces of said brake line openings (24, 26) being enclosed completely by plastic in order to prevent the high pressure fluid from entering between interfaces of the metallic liner (12) and the plastic housing (30), and that the reservoir openings (20, 22) associated with the reservoir (50) each include an additional pressure opening (41) disposed in the plastic housing (30) and adjacent a respective reservoir openings means (38, 40).

2. The master cylinder in accordance with claim 1, characterized in that said reservoir (50) is integral with said plastic housing (30).

3. The master cylinder in accordance with claim 1, characterized in that the master cylinder further comprises outlet inserts (85) secured within the plastic housing (30) at the outlet means (34, 36) and for fixedly receiving the brake line connections.

4. The master cylinder in accordance with claim 1, characterized in that said liner (12) has at an open end (16) a flange (18) extending radially outwardly.

5. The master cylinder in accordance with claim 1, characterized in that said pistons (90, 91) are biased by resilient means (64, 72) toward an open end (16) of said master cylinder.

**Patentansprüche**

1. Hauptzylinderanordnung (10) mit einem Gehäuse (30), das eine Bohrung (28) bildet, in der zwei Kolben (60, 70) beweglich gelagert sind, einer Dichtungseinrichtung (80), die mit den beiden Kolben und der Bohrungswand zusammenwirkt, um zwei Druckkammern (90, 91) zu bilden, einem Reservoir (50), Reservoirdurchlässen (38, 40) zur Verbindung mit den Druckkammern, um eine Strömungsmittelverbindung innerhalb des Reservoirs mit der Bohrung zu ermöglichen, Bremsleitungs-Auslässen (34, 36), die dazu dienen, Strömungsmitteldruck aus den entsprechenden Kammern den entsprechenden Bremsleitungs-Anschlüssen zuzuführen, wobei die beiden Kolben (60, 70) während eines Bremsvorganges so bewegbar sind, daß sie innerhalb der beiden Druckkammern (90, 91) einen Strömungsmitteldruck erzeugen, der den zugehörigen Bremsleitungs-Anschlüssen zuführbar ist, wobei ein Einsatz (12) am Gehäuse (30) anliegt, das Gehäuse (30) aus einem Kunststoffgehäuse (30) besteht, das den Einsatz umgibt, welcher seinerseits aus einem metallischen Einsatz (12) in Form eines Rohres besteht, das Kunststoffgehäuse einstückig mit dem Einsatz (12) vergossen ist, der Einsatz (12) dem Kunststoffgehäuse (30) bauliche Festigkeit verleiht und Reservoiröffnungen (20, 22) und Bremsleitungsöffnungen (24, 26) umfaßt, von denen die Reservoiröffnungen (20, 33) Bereiche innerhalb des Kunststoffgehäuses (30) definieren, durch die die Reservoirdurchlässe (38, 40) verlaufen, und die Oberflächen der Reservoiröffnungen (20, 22) vollständig von Kunststoff umschlossen sind, dadurch gekennzeichnet, daß der Einsatz (12) innerhalb des Gehäuses einsatzgegossen und innen sowie außen vollständig von Kunststoff eingeschlossen ist, dort, wo das Gehäuse (30) und der Einsatz (12) den Umfang der Druckkammern (90, 91) bilden, daß die Bremsleitungsöffnungen (24, 26) ferner Bereiche des Gehäuses definieren, durch die sich die Bremsleitungs-Auslässe (34, 36) erstrecken, wobei die Oberflächen der Bremsleitungsöffnungen (24, 26) vollständig von Kunststoff umschlossen sind, um das Hochdruckströmungsmittel daran zu hindern, zwischen die Anlageflächen des metallischen Einsatzes (12) und des Kunststoffgehäuses (30) einzudringen, und daß die dem Reservoir (50) zugeordneten Reservoiröffnungen (20, 22) jeweils eine zusätzliche Drucköffnung (41) umfassen, die in dem Kunststoffgehäuse (30) angrenzend an einem entsprechenden Reservoirdurchlaß (38, 40) angeordnet ist.

2. Hauptzylinder nach Anspruch 1, dadurch gekennzeichnet, daß das Reservoir (50) mit dem Kunststoffgehäuse (30) einstückig ausgebildet ist.

3. Hauptzylinder nach Anspruch 1, dadurch gekennzeichnet, daß der Hauptzylinder ferner Auslaßeinsätze (85) aufewist, die innerhalb des Kunststoffgehäuses (30) an en Bremsleitungs-Auslässen (34, 36) befestigt sind und zur festen Aufnahme der Bremsleitungs-Anschlüsse dienen.

4. Hauptzylinder nach Anspruch 1, dadurch gekennzeichnet, daß der Einsatz (12) an einem offenen Ende (16) einen radial nach außen verlaufenden Flansch (18) aufweist.

5. Hauptzylinder nach Anspruch 1, dadurch gekennzeichnet, daß die Kolben (90, 91) durch elastische Mittel (64, 72) in Richtung auf ein offenes Ende (16) des Hauptzylinders vorgespannt sind.

**Revendications**

1. Ensemble de maître cylindre (10) comprenant un boîtier (30) définissant un alésage (28) recevant une paire de pistons mobiles (60, 70), des joints (80) pour agir conjointement avec la paire de pistons et l'alésage pour définir une paire de chambres de pression (90, 91), un réservoir (50), des orifices de réservoir (38, 40) en communication avec les dites chambres de pression pour permettre au fluide contenu à l'intérieur du réservoir d'être en communication avec le dit alésage, des sorties de tuyauterie de frein (34, 36) pour transférer le fluide sous pression des chambres aux tuyauteries de frein respectives, la paire de pistons (60, 70) étant mobile durant le freinage pour engendrer la pression de fluide à l'intérieur des chambres de pression (90, 91) et transmettre le fluide sous pression aux tuyauteries de frein associées, un fourreau (12) en contact avec le boîtier (30) en matière plastique entourant ledit fourreau en métal (12) de forme tubulaire, ledit boîtier étant moulé solidaire du fourreau (12), le fourreau (12) assurant une unité de structure pour le dit boîtier en matière plastique (30) et incluant des orifices de réservoir (20, 22) et des orifices de tuyauteries de frein (24, 26), les orifices du réservoir (20, 22) étant des ouvertures dans le boîtier en matière plastique (30) et les orifices de réservoir (38, 40) étant totalement inclus dans la matière plastique, caractérisé en ce que le fourreau (12) avec ledit boîtier sont complètement entourés intérieurement et extérieurement par la matière plastique où ledit boitier (30) et le fourreau (12) définissent les périmètres des chambres de pression (90, 91), que les orifices pour la tuyauterie de frein (24, 26), sont des ouvertures dans le boîtier (30) avec lesdites sorties des liaisons de frein (34, 36) et les orifices de liaison des tuyauteries de frein (24, 26) étant entièrement inclus dans la matière plastiqué de façon à interdire le fluide à haute pression de fuire entre les interfaces du fourreau métallique (12) et le boîtier en matière plastique (30), et que les orifices (20, 22) du réservoir en matière plastique (30) conjointement avec le réservoir (50) incluent chacun un orifice de pression complémentaire (41) disposé dans le bôitier en matière plastique (30) et adjacent à des orifices (38, 40) du réservoir.

2. Maître cylindre selon la revendication 1, caractérisé en ce que ledit réservoir (50) et le boîtier en matière plastique (30) sont parties intégrantes.

3. Maître cylindre selon la revendication 1, caractérisé en ce que le maître cylindre comprend en outre des pièces de sortie (85) fixées dans le boîtier en matière plastique (30) aux moyens de sortie (34, 36) pour qu'y soient fixées les tuyauteries de frein.

4. Maître cylindre selon la revendication 1, caractérisé en ce que le fourreau (12) a à une extrémité ouverte (16) un flasque (18) s'étendant radialement vers l'extérieur.

5. Maître cylindre selon la revendication 1, caractérisé en ce que les pistons (60, 70) sont sollicités par des moyens élastiques (64, 72) vers une extrémité ouverte (16) du maître cylindre.

FIG. 1